(19) Europäisches Patentamt
European Patent Office
Office européen des brevets

(11) **EP 4 509 812 A2**

(12) **EUROPÄISCHE PATENTANMELDUNG**

(43) Veröffentlichungstag:
**19.02.2025 Patentblatt 2025/08**

(51) Internationale Patentklassifikation (IPC):
***G01M 11/02*** *(2006.01)* ***G01B 11/24*** *(2006.01)*

(21) Anmeldenummer: **24182941.5**

(52) Gemeinsame Patentklassifikation (CPC):
**G01M 11/025; G01B 11/24**

(22) Anmeldetag: **18.06.2024**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **16.08.2023 DE 102023207858**

(71) Anmelder: **Dr. Johannes Heidenhain GmbH 83301 Traunreut (DE)**

(72) Erfinder:
• **SCHOSER, Jürgen 83301 Traunreut (DE)**
• **LAMMERS, Kim 83301 Traunreut (DE)**
• **BECKER, Thomas 83301 Traunreut (DE)**

(54) **SENSORANORDNUNG FÜR EINE OBERFLÄCHENMESSUNG**

(57) Die vorliegende Erfindung betrifft eine Sensoranordnung (10) zum Erfassen einer Eigenschaft einer in einer ersten Ebene (T1) liegenden Oberfläche (1.1) eines Objekts (1). Die Sensoranordnung (10) weist eine Lichtquelle (12), ein strahlteilendes Element (14), ein Detektorelement (16) und ein Gitterelement (18) auf. Das Gitterelement (18) ist zwischen dem Detektorelement (16) und dem strahlteilenden Element (14) angeordnet. Das Gitterelement (18) dient zum Erzeugen eines Intensitätsmusters (101-1; 101-2) auf einer in einer zweiten Ebene (T2) liegenden strahlungsempfindlichen Oberfläche (16.1) des Detektorelements (16). Die Sensoranordnung (10) weist ein erstes Linsensystem (20.1) zur Abbildung der ersten Ebene (T1) auf die zweite Ebene (T2) auf. Das erste Linsensystem (20.1) ist in einem Detektionsstrahlengang zwischen dem Detektorelement (16) und dem Objekt (1) angeordnet.

## FIG. 1a

EP 4 509 812 A2

# FIG. 1b

**Beschreibung**

<u>GEBIET DER TECHNIK</u>

Die vorliegende Erfindung betrifft eine Sensoranordnung zum Erfassen einer Eigenschaft einer in einer ersten Ebene liegenden Oberfläche eines Objekts nach dem Oberbegriff des Anspruchs 1.

<u>STAND DER TECHNIK</u>

Eine gattungsgemäße Sensoranordnung ist aus CN 111751012 A bekannt. Die Sensoranordnung dient zur Vermessung der Form von optischen Elementen und der daraus für den weiteren Strahlengang resultierenden Aberrationen. Die Sensoranordnung umfasst eine Kombination eines Gitters und eines strukturierten Detektors. Ferner umfasst die Sensoranordnung einen Strahlteiler zur Zusammenführung eines Beleuchtungs- und eines Detektionsstrahlengangs. Das Gitter ist als Kreuzgitter ausgebildet.

Das Messprinzip der Sensoranordnung ist wie folgt: Ein zu prüfendes Objekt (d. h. Prüfling) wird mit einer ebenen Welle beleuchtet. Bei einer Reflexion wird die ebene Welle durch die optischen Eigenschaften des Objekts modifiziert. Jede Abweichung der reflektierten (modifizierten) Welle von einer ebenen Welle lässt Rückschlüsse auf die optischen Eigenschaften des Objekts zu. Durch die Kombination des Gitters und des strukturierten Detektors wird eine Rekonstruktion einer durch eine Oberfläche des Objekts modifizierten Wellenfront ermöglicht. Dies ermöglicht wiederum eine Bestimmung der optischen Eigenschaften des Objekts.

<u>ZUSAMMENFASSUNG DER ERFINDUNG</u>

Der vorliegenden Erfindung liegt die Aufgabe zugrunde, eine Sensoranordnung zum Erfassen einer Eigenschaft einer in einer ersten Ebene liegenden Oberfläche eines Objekts anzugeben, die einfach und kompakt aufgebaut ist und mit der eine präzise Detektion des Objekts ermöglicht wird.

Diese Aufgabe wird erfindungsgemäß durch eine Sensoranordnung mit den Merkmalen des Anspruchs 1 gelöst.

Die erfindungsgemäß ausgebildete Sensoranordnung dient zum Erfassen einer Eigenschaft einer in einer ersten Ebene liegenden Oberfläche eines Objekts. Die Sensoranordnung weist eine Lichtquelle zum Erzeugen von Licht auf. Die Sensoranordnung weist ein strahlteilendes Element zum Umlenken oder Hindurchlassen des Lichts der Lichtquelle auf das Objekt auf. Die Sensoranordnung weist ein Detektorelement zum Erfassen von an dem Objekt reflektiertem und durch das strahlteilende Element transmittiertem oder am strahlteilenden Element reflektiertem Licht auf. Die Sensoranordnung weist ein zwischen dem Detektorelement und dem strahlteilenden Element angeordnetes Gitterelement zum Erzeugen eines Intensitätsmusters auf einer in einer zweiten Ebene liegenden strahlungsempfindlichen Oberfläche des Detektorelements auf. Die Sensoranordnung weist ein erstes Linsensystem zur Abbildung der ersten Ebene auf die zweite Ebene auf. Das erste Linsensystem ist in einem Detektionsstrahlengang zwischen dem Detektorelement und dem Objekt angeordnet.

Vorzugsweise ist das erste Linsensystem ein afokales Linsensystem.

Es ist vorteilhaft, wenn das erste Linsensystem dazu ausgebildet ist, eine Vergrößerung einer Abbildung der ersten Ebene auf die zweite Ebene zu bewirken und wenn die Vergrößerung in einem Bereich von 1 bis 10, im Bereich von 1,5 bis 8 oder im Bereich von 2 bis 6 liegt.

Es ist vorteilhaft, wenn das erste Linsensystem ein erstes Linsenelement und ein zweites Linsenelement umfasst, wenn das erste Linsenelement zwischen dem strahlteilenden Element und dem Objekt angeordnet ist und wenn das zweite Linsenelement zwischen dem Detektorelement und dem strahlteilenden Element angeordnet ist.

Vorzugsweise ist das strahlteilende Element in einem Detektionsstrahlengang zwischen dem Detektorelement und dem Objekt angeordnet. Beispielsweise ist das strahlteilende Element im Detektionsstrahlengang zwischen dem ersten Linsenelement und dem zweiten Linsenelement angeordnet. Alternativ kann das strahlteilende Element im Detektionsstrahlengang zwischen dem ersten Linsenelement und dem Objekt angeordnet sein. Alternativ kann das strahlteilende Element im Detektionsstrahlengang zwischen dem Detektorelement und dem zweiten Linsenelement angeordnet sein.

Anstelle des ersten Linsenelements kann auch eine erste Linsenelementgruppe vorgesehen sein. Ferner kann anstelle des zweiten Linsenelements auch eine zweite Linsenelementgruppe vorgesehen sein. Die erste und/oder zweite Linsenelementgruppe können jeweils ein zusammengesetztes Dublett (Achromat) oder ein komplettes Objektiv sein.

Es ist vorteilhaft, wenn das erste Linsenelement einen bildseitigen ersten Brennpunkt hat, wenn das zweite Linsenelement einen objektseitigen zweiten Brennpunkt hat, wenn der erste Brennpunkt und der zweite Brennpunkt in einem gemeinsamen Punkt zusammenfallen und wenn der gemeinsame Punkt zwischen dem zweiten Linsenelement und dem strahlteilenden Element oder zwischen dem strahlteilenden Element und dem ersten Linsenelement angeordnet ist.

Ferner ist es vorteilhaft, wenn das Gitterelement in einer dritten Ebene angeordnet ist, wenn die dritte Ebene und die zweite Ebene in einem vorbestimmten Abstand voneinander angeordnet sind und wenn der vorbestimmte Abstand kleiner als die Hälfte oder ein Viertel eines von einer Periode des Gitterelements abhängigen Talbot-Abstands ist.

Vorzugsweise ist das Gitterelement als reines Amplitudengitter ausgebildet. Das Gitterelement ist insbesondere ein lineares Gitter oder ein zweidimensionales Gitter (z. B. Kreuzgitter oder Schachbrettgitter).

Vorzugsweise ist die Lichtquelle eine inkohärente Lichtquelle (z. B. LED).

Eine Werkzeugmaschine mit der erfindungsgemäßen Sensoranordnung ist im Anspruch 15 angegeben. Die Werkzeugmaschine weist eine Werkzeugaufnahme und ein mit der Werkzeugaufnahme verbundenes Gehäuseteil auf. Die Sensoranordnung ist in das Gehäuseteil integriert. Das Gehäuseteil ist zwischen der Werkzeugaufnahme und dem Objekt angeordnet.

Die erste Ebene kann auch als Objektebene bezeichnet werden, und die zweite Ebene kann auch als Bildebene bezeichnet werden.

Durch die Erfindung wird mit einer einfach und kompakt aufgebauten Sensoranordnung eine präzise Detektion einer Eigenschaft (z. B. rekonstruierte Höhe oder rekonstruiertes Höhenprofil nach einer Tiefpassfilterung, die hochfrequente Rauheiten eliminiert) einer Oberfläche des Objekts ermöglicht. Die Detektion des Objekts erfolgt insbesondere in Bezug auf eine relativ große Welligkeitsperiode und -amplitude (z. B. Welligkeitsperiode im Bereich von 0,1 mm bis 2 mm; Welligkeitsamplitude im Bereich von 0,8 $\mu$m bis 20 $\mu$m) der Oberfläche des Objekts. Hierzu ist ein in einem Detektionsstrahlengang der Sensoranordnung angeordnetes Linsensystem (d. h. erstes Linsensystem) vorgesehen. Durch das erste Linsensystem wird eine gewünschte Abbildung zwischen der ersten Ebene (d. h. Objektebene) und der zweiten Ebene (d. h. Bildebene) bewirkt. Beispielsweise sind die Abbildung oder ein Parameter (z. B. Vergrößerung) der Abbildung an die Oberfläche (z. B. Oberflächenwinkel) des Objekts angepasst. Dadurch wird eine hohe Genauigkeit der Detektion des Objekts, insbesondere beim Vorhandensein der oben genannten beispielhaften Welligkeitsperiode und -amplitude, erreicht, bzw. überhaupt erst die Detektion der Oberflächeneigenschaft des Objekts ermöglicht. Die Erfindung ermöglicht zudem die Realisierung der gewünschten Abbildung zusammen mit einer kollimierten Beleuchtung der Oberfläche des Objekts. Dadurch wird im Wesentlichen ein optimierter Beleuchtungs- und Detektionsstrahlengang der Sensoranordnung für die Detektion des Objekts erhalten.

Die erfindungsgemäße Sensoranordnung kann auch als plenoptische Kamera aufgefasst werden. Durch die Sensoranordnung kann neben einer Ortsinformation der Objektabbildung zugleich auch eine im Intensitätsmuster/Streifenmuster kodierte Winkelinformation erhalten werden.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von Ausführungsbeispielen der Erfindung in Verbindung mit den Figuren erläutert.

## KURZE BESCHREIBUNG DER ZEICHNUNGEN

Es zeigen

Figur 1a     eine Sensoranordnung mit einem ersten Linsensystem zur Abbildung einer ersten Ebene auf eine zweite Ebene gemäß einem ersten Ausführungsbeispiel;

Figur 1b     eine alternative Darstellung eines durch das erste Linsensystem nach Figur 1a erzeugten Detektionsstrahlengangs;

Figur 2     eine Sensoranordnung gemäß einem zweiten Ausführungsbeispiel;

Figur 3     eine schematische Darstellung zur Veranschaulichung einer Bedingung für einen Winkel eines einfallenden Strahls, wobei der einfallende Strahl auf die zweite Ebene auftrifft;

Figur 4a     ein beispielhaftes Intensitätsmuster und ein beispielhafter Intensitätsverlauf, wobei das Intensitätsmuster und der Intensitätsverlauf bei der Abbildung der ersten Ebene auf die zweite Ebene über einen Detektionsstrahlengang erfasst bzw. ermittelt werden, wobei der Detektionsstrahlengang von einer glatten (ebenen) Oberfläche eines Objekts ausgeht;

Figur 4b     ein beispielhaftes Intensitätsmuster und ein beispielhafter Intensitätsverlauf, wobei das Intensitätsmuster und der Intensitätsverlauf bei der Abbildung der ersten Ebene auf die zweite Ebene über einen Detektionsstrahlengang erfasst bzw. ermittelt werden, wobei der Detektionsstrahlengang von einer welligen Oberfläche eines Objekts ausgeht;

Figur 5    ein beispielhafter Intensitätsverlauf, der dem Intensitätsverlauf nach Figur 4b entspricht;

Figur 6    ein Blockdiagramm einer beispielhaften Auswerteeinheit;

Figur 7    eine beispielhafte Werkzeugmaschine mit einer Sensoranordnung gemäß einem dritten Ausführungsbeispiel, wobei die Sensoranordnung in einem Gehäuseteil der Werkzeugmaschine integriert ist; und

Figur 8    eine Sensoranordnung gemäß einem vierten Ausführungsbeispiel.

## BESCHREIBUNG DER AUSFÜHRUNGSFORMEN

Gleiche Elemente oder funktionell gleiche Elemente sind in den Figuren mit gleichen Bezugszeichen versehen.

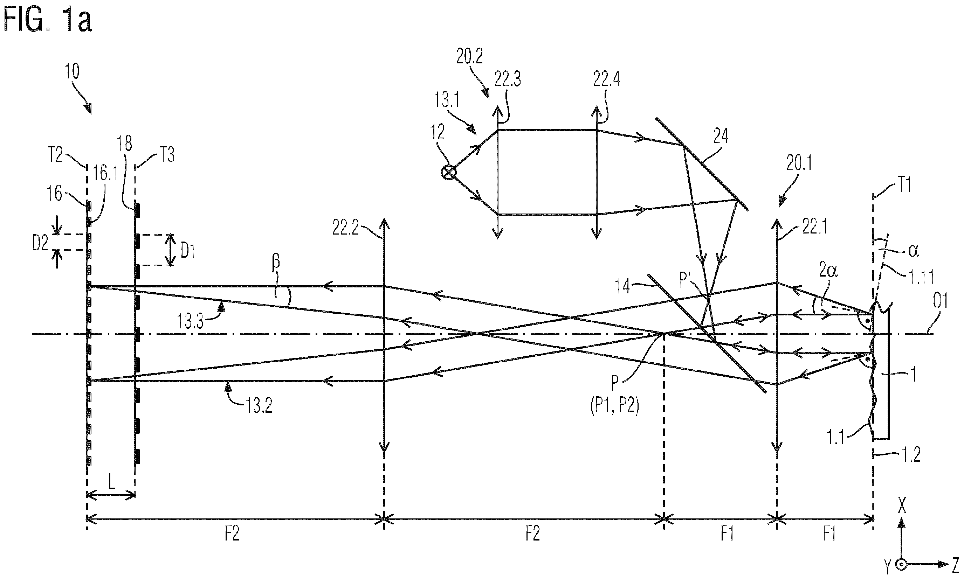

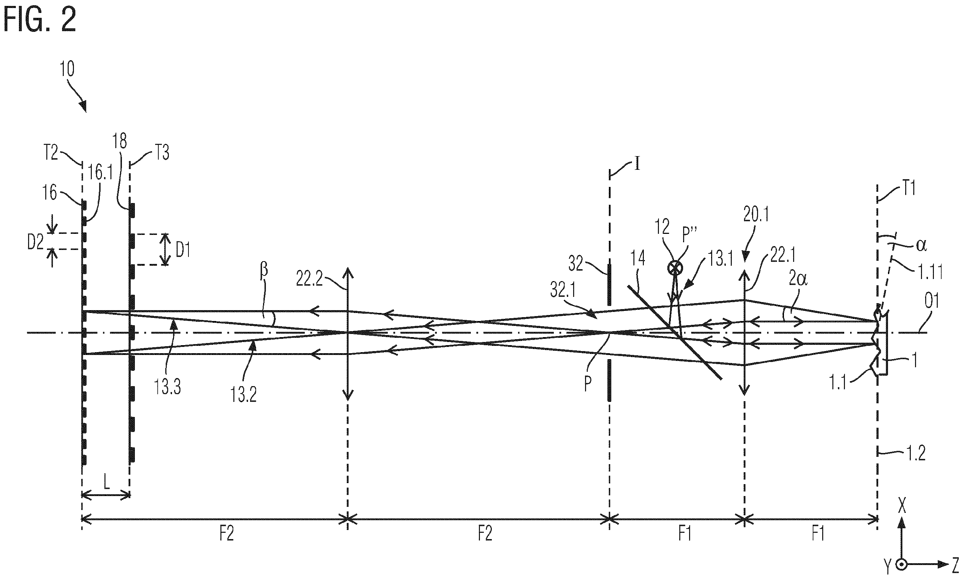

Ein erstes und zweites Ausführungsbeispiel werden nachfolgend anhand der Figuren 1a und 2 erläutert. Die Sensoranordnung 10 gemäß dem ersten und zweiten Ausführungsbeispiel dient zum jeweiligen Erfassen einer Eigenschaft (z. B. rekonstruierte Höhe) einer in einer ersten Ebene T1 liegenden Oberfläche 1.1 eines Objekts 1. Die Oberfläche 1.1 des Objekts 1 hat insbesondere eine Welligkeit (z. B. Welligkeitsperiode im Bereich von 0,1 mm bis 2 mm; Welligkeitsamplitude im Bereich von 0,8 $\mu$m bis 20 $\mu$m).

In den Figuren ist eine optische Achse O1 gezeigt. Die optische Achse O1 entspricht einer Symmetrieachse zumindest eines Teils eines Detektionsstrahlengangs der Sensoranordnung 10. Ferner sind in den Figuren Koordinatensysteme (X, Y, Z) gezeigt. Eine erste Koordinatenachse (X-Achse) ist senkrecht zur optischen Achse O1 und parallel zur Papierebene.

Eine zweite Koordinatenachse (Y-Achse) ist senkrecht zur Papierebene. Eine dritte Koordinatenachse (Z-Achse) ist parallel zur optischen Achse O1. Die erste Ebene T1 ist senkrecht zur optischen Achse O1.

Die Sensoranordnung 10 nach Figur 1a weist eine Lichtquelle 12 zum Erzeugen von Licht auf. Die Lichtquelle 12 ist insbesondere eine inkohärente Lichtquelle (z. B. LED). Ferner weist die Sensoranordnung 10 nach Figur 1a ein strahlteilendes Element 14 zum Umlenken des Lichts der Lichtquelle 12 auf das Objekt 1 auf. Wie in Figur 1a gezeigt, wird zwischen der Lichtquelle 12 und dem Objekt 1 ein erster Strahlengang 13.1 (d. h. Beleuchtungsstrahlengang) gebildet.

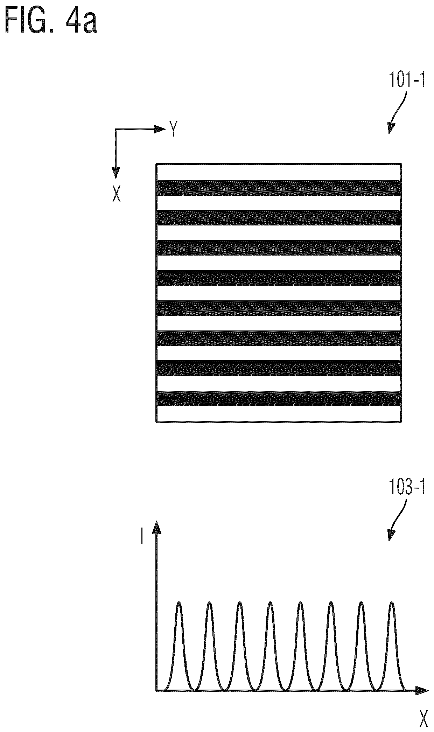

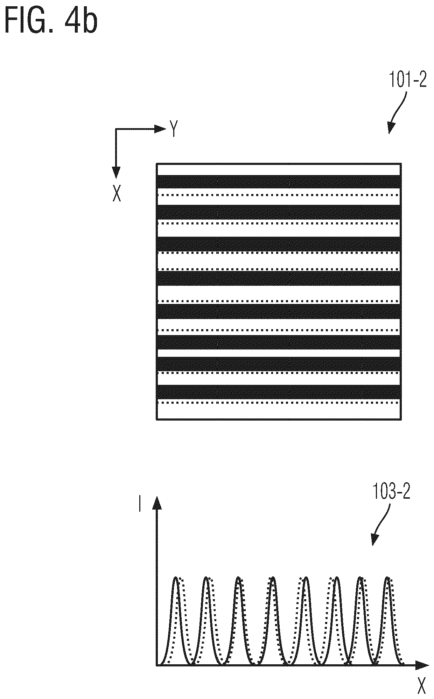

Die Sensoranordnung 10 nach Figur 1a weist ein Detektorelement 16 zum Erfassen von an dem Objekt 1 reflektiertem und durch das strahlteilende Element 14 transmittiertem Licht auf. Ferner weist die Sensoranordnung 10 nach Figur 1a ein zwischen dem Detektorelement 16 und dem strahlteilenden Element 14 angeordnetes Gitterelement 18 zum Erzeugen eines Intensitätsmusters (z. B. Intensitätsmuster 101-1, 101-2 nach Figur 4a, 4b) auf einer in einer zweiten Ebene T2 liegenden strahlungsempfindlichen Oberfläche 16.1 des Detektorelements 16 auf. Die zweite Ebene T2 ist parallel zur ersten Ebene T1. Wie in Figur 1a gezeigt, wird zwischen dem Detektorelement 16 und dem Objekt 1 ein zweiter (virtueller) Strahlengang 13.2 gebildet. Der zweite Strahlengang 13.2 entspricht einem Detektionsstrahlengang ausgehend von einer glatten (virtuellen) Oberfläche 1.2 des Objekts 1. Ferner ist in Figur 1a gezeigt, dass zwischen dem Detektorelement 16 und dem Objekt 1 ein dritter Strahlengang 13.3 gebildet wird. Der dritte Strahlengang 13.3 entspricht einem Detektionsstrahlengang ausgehend von der welligen Oberfläche 1.1 des Objekts 1.

Die Sensoranordnung 10 nach Figur 1a weist ein erstes Linsensystem 20.1 zur Abbildung der ersten Ebene T1 auf die zweite Ebene T2 auf. Das erste Linsensystem 20.1 ist zwischen dem Detektorelement 16 und dem Objekt 1 angeordnet. Die erste Ebene T1 entspricht einer Objektebene. Die zweite Ebene T2 entspricht einer Bildebene.

In vorteilhafter Weise ist das erste Linsensystem 20.1 als afokales Linsensystem ausgebildet.

Das erste Linsensystem 20.1 ist dazu ausgebildet, eine Vergrößerung (Parameter m) einer Abbildung der ersten Ebene T1 auf die zweite Ebene T2 zu bewirken. Beispielsweise liegt der Parameter m in einem Bereich von 1 bis 10, im Bereich von 1,5 bis 8 oder im (bevorzugten) Bereich von 2 bis 6.

In Figur 1a ist ein Winkel $\alpha$ (d. h. Oberflächenwinkel) zwischen der ersten Ebene T1 und einer lokalen Tangente 1.11 an den gezeichneten Punkt der Oberfläche 1.1 des Objekts 1 gezeigt. Ferner ist in Figur 1a ein Winkel $2\alpha$ (d. h. das Doppelte des Reflexionswinkels) zwischen einem einfallenden Strahl des ersten Strahlengangs 13.1 (wobei der einfallende Strahl auf die erste Ebene T1 auftrifft) und einem reflektierten Strahl des dritten Strahlengangs 13.3 (wobei der reflektierte Strahl von der ersten Ebene T1 ausgeht) gezeigt. Figur 1a zeigt zudem einen Winkel $\beta$ zwischen einem einfallenden Strahl des zweiten Strahlengangs 13.2 und einem einfallenden Strahl des dritten Strahlengangs 13.3 (wobei die einfallenden Strahlen jeweils auf die zweite Ebene T2 auftreffen). Wie in Figur 1a gezeigt, sind der auf die erste Ebene T1 auftreffende einfallende Strahl des ersten Strahlengangs 13.1 und der auf die zweite Ebene T2 auftreffende einfallende Strahl des zweiten Strahlengangs 13.2 jeweils parallel zur optischen Achse O1.

Wie in Figur 1a zu erkennen, entspricht der Winkel $2\alpha$ dem Doppelten des Winkels $\alpha$. Ferner ist der Winkel $\beta$ durch die folgende Beziehung gegeben:

$$\beta = \frac{2\alpha}{m} \qquad\qquad \text{(Gl. 1)}$$

Für den Fall m > 1 ist der Winkel β kleiner als der Winkel 2α. Der Fall m = 1 entspricht einer 1:1-Abbildung.

Das erste Linsensystem 20.1 umfasst ein erstes Linsenelement 22.1 und ein zweites Linsenelement 22.2. Das erste Linsenelement 22.1 ist zwischen dem strahlteilenden Element 14 und dem Objekt 1 angeordnet. Das zweite Linsenelement 22.2 ist zwischen dem Detektorelement 16 und dem strahlteilenden Element 14 angeordnet.

Das erste Linsenelement 22.1 hat einen bildseitigen ersten Brennpunkt P1. Das zweite Linsenelement 22.2 hat einen objektseitigen zweiten Brennpunkt P2. Der erste Brennpunkt P1 und der zweite Brennpunkt P2 fallen in einem gemeinsamen Punkt P zusammen. Beim ersten Ausführungsbeispiel liegt der gemeinsame Punkt P zwischen dem zweiten Linsenelement 22.2 und dem strahlteilenden Element 14.

Die Sensoranordnung 10 nach Figur 1a weist ein reflektierendes Element 24 zum Umlenken des Lichts der Lichtquelle 12 auf das strahlteilende Element 14 auf. Ferner weist die Sensoranordnung 10 nach Figur 1a ein zwischen der Lichtquelle 12 und dem reflektierenden Element 24 angeordnetes zweites Linsensystem 20.2 auf. Das zweite Linsensystem 20.2 hat einen Zwischenbrennpunkt P'. Beim ersten Ausführungsbeispiel ist der Zwischenbrennpunkt P' zwischen dem reflektierenden Element 24 und dem strahlteilenden Element 14 angeordnet. Der Zwischenbrennpunkt P' entspricht einer bildseitigen Brennweite F1 des ersten Linsenelements 22.1. Das erste Linsenelement 22.1 ist dazu ausgebildet, von dem Zwischenbrennpunkt P' ausgehendes Licht zu kollimieren.

Wie in Figur 1a gezeigt, umfasst das zweite Linsensystem 20.2 ein drittes Linsenelement 22.3 und ein viertes Linsenelement 22.4. Durch das zweite Linsensystem 20.2 in Verbindung mit dem ersten Linsenelement 22.1 wird eine kollimierte Beleuchtung des Objekts 1 erreicht.

Durch das erste Linsensystem 20.1 wird zudem erreicht, dass ein reflektierter Strahl des zweiten Strahlengangs 13.2 (wobei der reflektierte Strahl von der ersten Ebene T1 ausgeht) und ein einfallender Strahl des zweiten Strahlengangs 13.2 (wobei der einfallende Strahl auf die zweite Ebene T2 auftrifft) jeweils parallel zur optischen Achse O1 verlaufen. Dadurch wird im Wesentlichen eine Abbildung aus dem Unendlichen in das Unendliche erreicht. Dadurch wird wiederum vermieden, dass ein scharfes Abbild der Lichtquelle 12 auf dem Detektorelement 16 entsteht, was störend auf die Rekonstruktion bzw. Auswertung einwirken würde.

Wie in Figur 1a gezeigt, entspricht ein Abstand zwischen dem ersten Linsenelement 22.1 und der ersten Ebene T1 einer objektseitigen Brennweite F1 des ersten Linsenelements 22.1. Die bildseitige Brennweite F1 des ersten Linsenelements 22.1 und die objektseitige Brennweite F1 des ersten Linsenelements 22.1 sind gleich groß. Ferner ist in Figur 1a gezeigt, dass ein Abstand zwischen der zweiten Ebene T2 und dem zweiten Linsenelement 22.2 einer bildseitigen Brennweite F2 des zweiten Linsenelements 22.2 entspricht. Die bildseitige Brennweite F2 des zweiten Linsenelements 22.2 und eine objektseitige Brennweite F2 des zweiten Linsenelements 22.2 sind gleich groß. Alternativ können die gerade genannten bildseitigen und objektseitigen Brennweiten F1, F2 jeweils auch unterschiedlich groß sein (z. B. bei einem Objektiv).

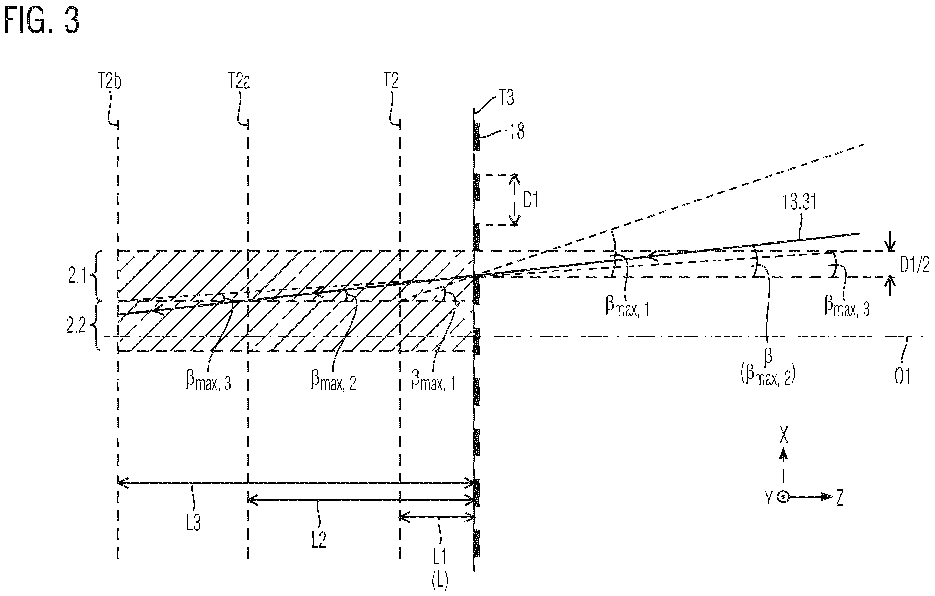

Gemäß Figur 1a ist das Gitterelement 18 in einer dritten Ebene T3 angeordnet. Die dritte Ebene T3 und die zweite Ebene T2 sind in einem vorbestimmten Abstand L voneinander angeordnet. Die zweite Ebene T2 und die dritte Ebene T3 sind parallel zueinander. In vorteilhafter Weise ist der vorbestimmte Abstand L kleiner als die Hälfte oder ein Viertel eines von einer Periode D1 des Gitterelements 18 abhängigen Talbot-Abstands. Dadurch wird eine geeignete Bedingung für den Winkel β erreicht. Dies wird im Folgenden anhand von Figur 3 noch näher erläutert.

Wie in Figur 1a schematisch dargestellt, hat die strahlungsempfindliche Oberfläche 16.1 des Detektorelements 16 eine vorbestimmte Periode D2. Vorzugsweise ist die vorbestimmte Periode D2 kleiner als die Hälfte, ein Viertel oder ein Zehntel der Periode D1 des Gitterelements 18. Dadurch wird erreicht, dass im Frequenzspektrum der Messung (d. h. erfasstes Intensitätsmuster) höhere Harmonische von einer Trägerfrequenz getrennt werden können.

Es ist vorteilhaft, wenn das Detektorelement 16 derart ausgebildet ist, dass eine Nyquist-Frequenz des Detektorelements 16 einem Vielfachen der Hälfte oder einem ungeradzahligen Vielfachen eines Viertels einer von der Periode D1 des Gitterelements 18 abhängigen Ortsfrequenz des durch das Gitterelement 18 erzeugten Intensitätsmusters (z. B. Intensitätsmuster 101-1, 101-2 in Figur 4a, 4b) entspricht. In diesem Fall können die oben genannten höheren Harmonischen exakt auf die Trägerfrequenz zurückabgebildet werden.

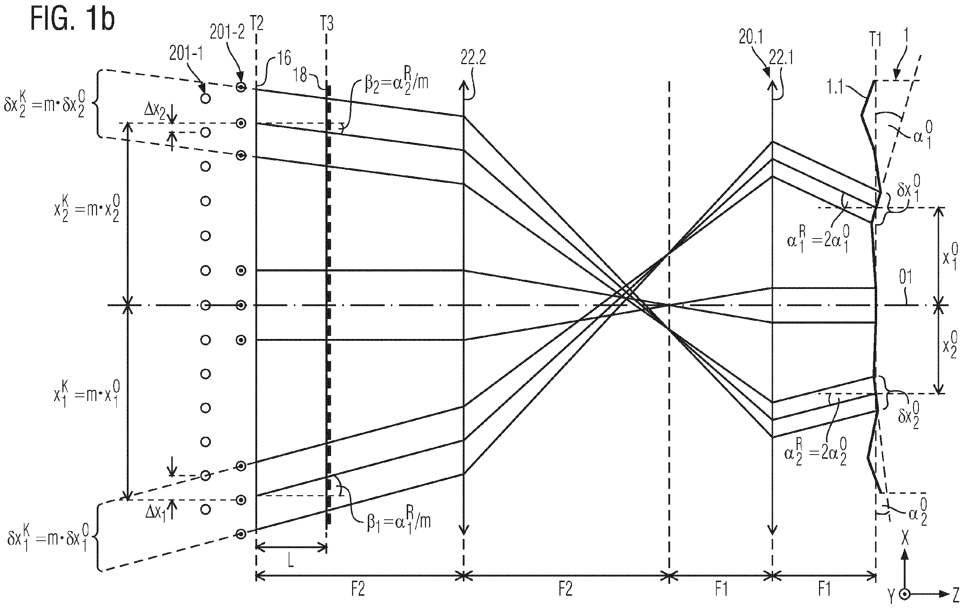

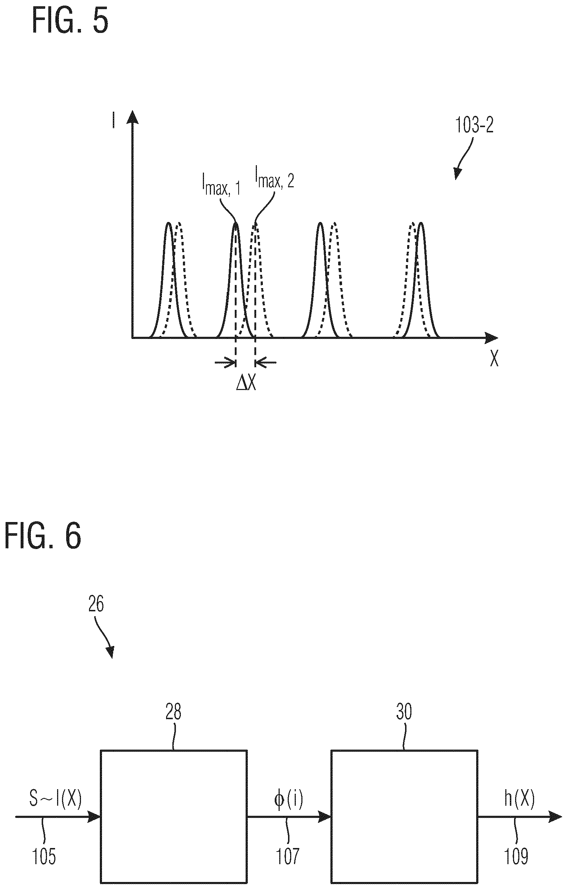

Figur 1b zeigt eine alternative Darstellung eines durch das erste Linsensystem 20.1 nach Figur 1a erzeugten Detektionsstrahlengangs. In Figur 1b wird die Oberfläche 1.1 des Objekts 1 als versetzte und zueinander verkippte Mikrospiegel (siehe erste Ebene T1) beschrieben. Durch die Darstellung nach Figur 1b wird die durch das erste Linsensystem 20.1 erzeugte afokale Abbildung von Oberflächenbereichen $\delta x_1^O$, $\delta x_2^O$ des Objekts 1 (siehe erste Ebene T1) auf Oberflächenbereiche $\delta x_1^K$, $\delta x_2^K$ der strahlungsempfindlichen Oberfläche 16.1 des Detektorelements 16 (siehe zweite Ebene T2; Element 16.1 nicht gezeigt) veranschaulicht. Ferner werden durch die Darstellung nach Figur 1b eine Ortsvergrößerung $x_1^O \rightarrow x_1^K, x_2^O \rightarrow x_2^K$ (wobei $x_1^K > x_1^O, x_2^K > x_2^O$, mit $x_1^K = m \cdot x_1^O, x_2^K = m \cdot x_2^O$) und gleichzeitige Winkelverkleinerung $\alpha_1^R \rightarrow \beta_1$, $\alpha_2^R \rightarrow \beta_2$ (wobei $\beta_1 < \alpha_1^R$, $\beta_2 < \alpha_2^R$, mit $\beta_1 = \alpha_1^R/m$, $\beta_2 = \alpha_2^R/m$) veranschaulicht. Darüber hinaus wird durch die Darstellung nach Figur 1b eine lokale Verkippung als $\Delta x$-Versatz (d. h. $\Delta x_1$, $\Delta x_2$) des Intensitätsmusters (vgl. Figur 5, Parameter $\Delta X$) ersichtlich.

In Figur 1b bezeichnet der Index "O" Merkmale/Eigenschaften des Objekts 1 (Oberflächenbereiche, Orts- bzw. Winkelinformationen). Ferner bezeichnet der Index "R" Reflexionswinkel. Darüber hinaus bezeichnet der Index "K" Merkmale/Eigenschaften des Detektorelements 16 (Oberflächenbereiche, Ortsinformationen). Die Winkel $\alpha_1^O, \alpha_2^O$ in Figur 1b entsprechen jeweils dem Winkel $\alpha$ (Oberflächenwinkel) in Figur 1a. Die Winkel $\beta_1$, $\beta_2$ in Figur 1b entsprechen jeweils dem Winkel $\beta$ in Figur 1a.

In Figur 1b sind beispielhafte Intensitätsmuster 201-1 (Kreise), 201-2 (Kreise mit Punkt) gezeigt. Die Intensitätsmuster 201-1, 201-2 in Figur 1b entsprechen den nachfolgend anhand von Figur 4a, 4b erläuterten beispielhaften Intensitätsmustern 101-1, 101-2 (Streifenmuster). Durch die Darstellung der Intensitätsmuster 201-1, 201-2 in Figur 1b wird der Parameter $\Delta X$ ($\Delta x$-Versatz) veranschaulicht. In Figur 1b ist der Beleuchtungsstrahlengang der Übersichtlichkeit halber weggelassen worden.

Die Sensoranordnung 10 gemäß dem zweiten Ausführungsbeispiel unterscheidet sich von der Sensoranordnung 10 gemäß dem ersten Ausführungsbeispiel dadurch, dass die Lichtquelle 12 eine divergente Lichtquelle ist und lichtstromaufwärts des strahlteilenden Elements 14 an einer vorbestimmten Position P" angeordnet ist (vgl. Figur 2). Die vorbestimmte Position P" entspricht der bildseitigen Brennweite F1 des ersten Linsenelements 22.1. Das erste Linsenelement 22.1 ist dazu ausgebildet, von der vorbestimmten Position P" ausgehendes Licht zu kollimieren. Durch das erste Linsenelement 22.1 wird somit eine kollimierte Beleuchtung des Objekts 1 erreicht.

Die Sensoranordnung 10 nach Figur 2 weist ein in einer gemeinsamen inneren Brennebene I des ersten Linsensystems 20.1 angeordnetes Blendenelement 32 auf. Das Blendenelement 32 hat eine einstellbare Öffnung 32.1 zur Begrenzung eines Strahlengangs (d. h. zweiter oder dritter Strahlengang 13.2, 13.3 des ersten Linsensystems 20.1). Die gemeinsame innere Brennebene I ist parallel zur ersten bis dritten Ebene T1 bis T3 und verläuft durch den gemeinsamen Punkt P.

Durch das Blendenelement 32 kann eine Trennung zwischen relativ großen Winkeln (Winkel $2\alpha$) und relativ kleinen Winkeln (Winkel $2\alpha$) erfolgen. Typischerweise werden die relativ großen Winkel unerwünschten (hochfrequenten) Rauheiten des Objekts 1 zugeordnet. Die relativ kleinen Winkel werden typischerweise einer zu erfassenden (langperiodischen) Welligkeit des Objekts 1 zugeordnet. Durch die vorgenannte Trennung können Fehler in der Auswertung (bzw. Rekonstruktion) weitgehend vermieden werden.

Beim zweiten Ausführungsbeispiel kann das Blendenelement 32 auch weggelassen werden. Das Blendenelement 32 kann auch im ersten oder dritten Ausführungsbeispiel eingesetzt werden.

Figur 3 zeigt eine schematische Darstellung zur Veranschaulichung einer Bedingung für den Winkel $\beta$ (vgl. Figur 1a und 2). In Figur 3 ist beispielhaft ein einfallender Strahl 13.31 gezeigt. Der einfallende Strahl 13.31 trifft auf die zweite Ebene T2 auf. Die zweite Ebene T2 ist in einem ersten Abstand L1 von der dritten Ebene T3 angeordnet. Der erste Abstand L1 entspricht dem vorbestimmten Abstand L in Figur 1a und 2. Wie in Figur 3 zu erkennen, trifft der einfallende Strahl 13.31 in einem ersten Eindeutigkeitsbereich 2.1 auf die zweite Ebene T2 auf. Hierzu sollte folgende Bedingung erfüllt sein (erster Fall):

$$|\beta| < \beta_{max,1} = \left| \tan^{-1}\left(\frac{D1}{2L_1}\right) \right| \qquad \text{(Gl. 2)}$$

Ferner ist in Figur 3 Folgendes gezeigt: Die zweite (virtuelle) Ebene T2a ist in einem zweiten Abstand L2 von der dritten Ebene T3 angeordnet. Der zweite Abstand L2 ist größer als der erste Abstand L1. Die zweite (virtuelle) Ebene T2b ist in einem dritten Abstand L3 von der dritten Ebene T3 angeordnet. Der dritte Abstand L3 ist größer als der zweite Abstand L2.

Wie in Figur 3 zu erkennen, trifft der einfallende Strahl 13.31 im ersten Eindeutigkeitsbereich 2.1 (d. h. an der Grenze des ersten Eindeutigkeitsbereichs 2.1) auf die zweite (virtuelle) Ebene T2a auf. Hierzu sollte folgende Bedingung erfüllt sein (zweiter Fall):

$$|\beta| = \beta_{max,2} = \left| \tan^{-1}\left(\frac{D1}{2L_2}\right) \right| \qquad \text{(Gl. 3)}$$

Wie ferner in Figur 3 zu erkennen, trifft der einfallende Strahl 13.31 in einem zweiten Eindeutigkeitsbereich 2.2 (d. h. außerhalb des ersten Eindeutigkeitsbereich 2.1) auf die zweite (virtuelle) Ebene T2b auf. Dies stellt einen unzulässigen Fall dar. Mit anderen Worten, der einfallende Strahl 13.31 trifft nicht mehr im ersten Eindeutigkeitsbereich 2.1 auf die zweite (virtuelle) Ebene T2b auf. In diesem (unzulässigen) Fall wäre die folgende Bedingung erfüllt (dritter Fall):

$$|\beta| > \beta_{max,3} = \left|\tan^{-1}\left(\frac{D1}{2L_3}\right)\right| \qquad \text{(Gl. 4)}$$

Der erste und zweite Eindeutigkeitsbereich 2.1, 2.2 sind wie folgt definiert: Der einfallende Strahl 13.31 tritt durch eine erste Gitteröffnung (Ausdehnung D1/2) hindurch (vgl. Figur 3). Benachbart zu (und in Figur 3 unterhalb) der ersten Gitteröffnung ist ein erster Gittersteg angeordnet. Durch einen unteren Rand des ersten Gitterstegs und einen oberen Rand der ersten Gitteröffnung wird der erste Eindeutigkeitsbereich 2.1 definiert (vgl. die gestrichelten Linien parallel zur Z-Achse in Figur 3). Benachbart zu (und in Figur 3 unterhalb) der ersten Gitteröffnung und dem ersten Gittersteg ist eine zweite Gitteröffnung und ein zweiter Gittersteg angeordnet. Durch einen unteren Rand des zweiten Gitterstegs und einen oberen Rand der zweiten Gitteröffnung wird der zweite Eindeutigkeitsbereich 2.2 definiert (analog zum ersten Eindeutigkeitsbereich 2.1).

Figur 4a zeigt ein beispielhaftes Intensitätsmuster 101-1 und einen davon abgeleiteten beispielhaften Intensitätsverlauf 103-1. Das Intensitätsmuster 101-1 und der Intensitätsverlauf 103-1 sind der Abbildung der ersten Ebene T1 auf die zweite Ebene T2 über den zweiten Strahlengang 13.2 zugeordnet (vgl. Figur 1a und 2). Der Intensitätsverlauf 103-1 entspricht einer Intensität I als Funktion der X-Koordinate (X), d. h. I = I(X). Der Intensitätsverlauf 103-1 wird durch Integration des Intensitätsmusters 101-1 über die Y-Koordinate (Y) erhalten. Wie in Figur 4a gezeigt, ist der Intensitätsverlauf 103-1 periodisch in X-Richtung.

Figur 4b zeigt ein beispielhaftes Intensitätsmuster 101-2 und einen davon abgeleiteten beispielhaften Intensitätsverlauf 103-2. Das Intensitätsmuster 101-2 und der Intensitätsverlauf 103-2 sind der Abbildung der ersten Ebene T1 auf die zweite Ebene T2 über den dritten Strahlengang 13.3 zugeordnet (vgl. Figur 1a und 2). Der Intensitätsverlauf 103-2 stellt eine Intensität I als Funktion der X-Koordinate (X) dar, d. h. I = I(X). Der Intensitätsverlauf 103-2 wird durch Integration des Intensitätsmusters 101-2 über die Y-Koordinate (Y) erhalten. In Figur 4b sind gestrichelte Linien gezeigt. Die gestrichelten Linien in Figur 4b entsprechen dem Intensitätsmuster 101-1 bzw. dem Intensitätsverlauf 103-1 nach Figur4a. Wie in Figur 4b gezeigt, ist der Intensitätsverlauf 103-2 gegenüber den gestrichelten Linien lokal in X-Richtung verschoben (d. h. lokale Streckung oder Stauchung).

Figur 5 zeigt einen beispielhaften Intensitätsverlauf 103-2, der dem Intensitätsverlauf 103-2 nach Figur 4b entspricht. In Figur 5 ist insbesondere eine lokale Verschiebung (Parameter $\Delta X$) des Intensitätsverlaufs 103-2 gezeigt. Wie in Figur 5 schematisch dargestellt, entspricht der Parameter $\Delta X$ einem Abstand zwischen X-Koordinaten eines ersten Intensitätsmaximums $I_{max,1}$ und eines zweiten Intensitätsmaximums $I_{max,2}$. Durch den Parameter $\Delta X$ wird eine Abweichung von einer Periodizität des Gitterelements 18 angegeben. Der Parameter $\Delta X$ kann als relative Phase (sogenannte Takeda-Phase) aufgefasst werden.

Der Parameter $\Delta X$ resultiert beispielsweise aus einer Fourier-Auswertung des Intensitätsverlaufs 103-2 (abgeleitet vom Intensitätsmuster 101-2 bzw. Streifenmuster), z. B. basierend auf einem sogenannten Takeda-Algorithmus.

Figur 6 zeigt ein Blockdiagramm einer beispielhaften Auswerteeinheit 26. Die Auswerteeinheit 26 umfasst eine Einheit 28 und eine Einheit 30. Die Einheit 28 ist dazu ausgebildet, in Abhängigkeit eines das Intensitätsmuster (z. B. Intensitätsmuster 101-1, 101-2 in Figur 4a, 4b) darstellenden Signals 105 eine Phaseninformation 107 zu ermitteln. Die Einheit 30 ist dazu ausgebildet, in Abhängigkeit der Phaseninformation 107 eine rekonstruierte Höhe 109 als Eigenschaft der Oberfläche 1.1 des Objekts 1 zu ermitteln. In Figur 6 ist das Signal 105 mit S~I(X) bezeichnet. Die Phaseninformation 107 ist mit $\phi(i)$ bezeichnet. Die rekonstruierte Höhe 109 ist mit h(X) bezeichnet. Durch die Auswerteeinheit 26 kann die rekonstruierte Höhe 109 unter Verwendung der folgenden Beziehung ermittelt werden:

$$h(n/m \cdot \Delta\xi) = \tan\left\{\frac{1}{2} * \tan^{-1}\left(\frac{D1}{2\pi \cdot L}\sum_{i=1}^{n}\phi(i)\right)\right\}\Delta\xi, n \in [1, \ldots, N] \qquad \text{(Gl. 5)}$$

Hierbei sind $\phi(i)$ die Phaseninformation 107; $\Delta\xi$ eine Pixelgröße des Detektorelements 16; L der vorbestimmte Abstand zwischen der zweiten und dritten Ebene T2, T3; D1 die Periode des Gitterelements 18; m die Vergrößerung der Abbildung; N die Gesamtzahl von Pixeln des Detektorelements 16.

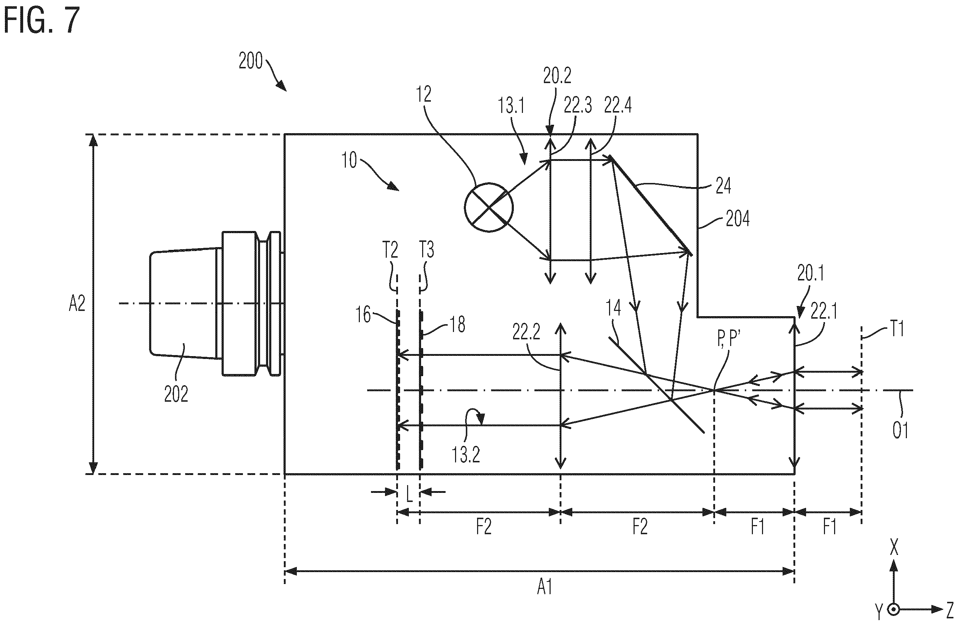

Figur 7 zeigt eine beispielhafte Werkzeugmaschine 200 mit einer Sensoranordnung 10 gemäß einem dritten Ausführungsbeispiel. Die Sensoranordnung 10 gemäß dem dritten Ausführungsbeispiel ist in ein Gehäuseteil 204 der Werkzeugmaschine 200 integriert. Die Sensoranordnung 10 gemäß dem dritten Ausführungsbeispiel unterscheidet sich von der Sensoranordnung 10 gemäß dem ersten Ausführungsbeispiel dadurch, dass der gemeinsame Punkt P zwischen dem strahlteilenden Element 14 und dem ersten Linsenelement 22.1 angeordnet ist. Beim dritten Ausführungsbeispiel ist zudem der Zwischenbrennpunkt P' zwischen dem strahlteilenden Element 14 und dem ersten Linsenelement 22.1 angeordnet. Wie in Figur 7 schematisch dargestellt, fallen der gemeinsame Punkt P und der Zwischenbrennpunkt P' zusammen.

Wie in Figur 7 gezeigt, weist die Werkzeugmaschine 200 eine Werkzeugaufnahme 202 auf. Die Werkzeugaufnahme 202 und das Gehäuseteil 204 sind miteinander verbunden. Durch die Integration der Sensoranordnung 10 gemäß dem dritten Ausführungsbeispiel in das Gehäuseteil 204 wird ein kompakter Aufbau erreicht.

Gemäß Figur 7 hat das Gehäuseteil 204 eine erste Ausdehnung A1 in Z-Richtung. Ferner hat das Gehäuseteil 204 eine zweite Ausdehnung A2 in X-Richtung. Die erste Ausdehnung A1 ist im Wesentlichen durch die Parameter F1 und F2 gegeben (vgl. Figur 7). Die zweite Ausdehnung A2 ist kleiner als die erste Ausdehnung A1. Ferner ist gemäß Figur 7 das reflektierende Element 24 der Sensoranordnung 10 derart nahe beim zweiten Linsensystem 20.2 angeordnet, dass eine Ausdehnung des Gehäuseteils 204 in Z-Richtung zumindest im Bereich des reflektierenden Elements 24 gegenüber der ersten Ausdehnung A1 verringert ist. Dadurch wird die Kompaktheit des Aufbaus optimiert.

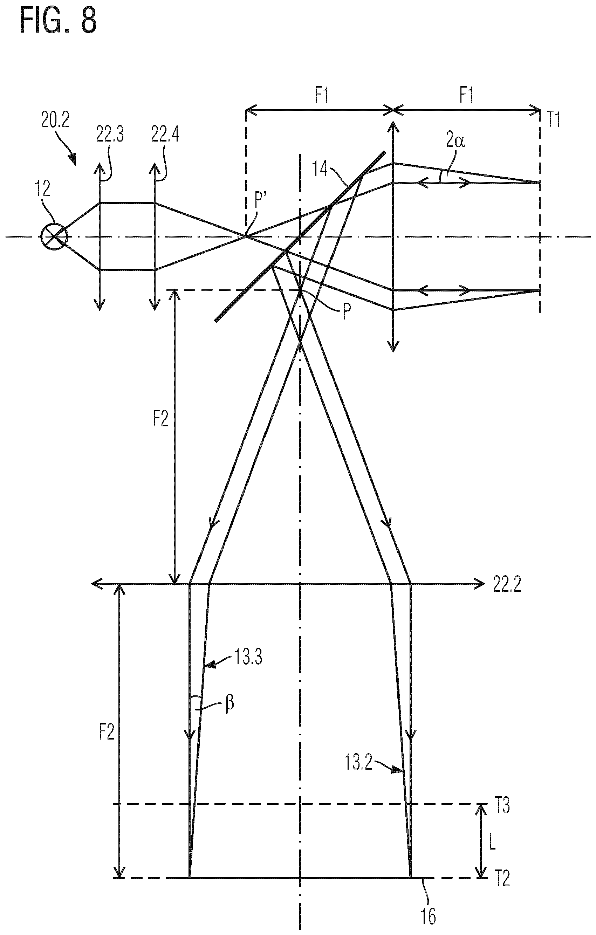

Figur 8 zeigt eine Sensoranordnung 10 gemäß einem vierten Ausführungsbeispiel. Die Sensoranordnung 10 gemäß dem vierten Ausführungsbeispiel unterscheidet sich von der Sensoranordnung 10 gemäß dem ersten Ausführungsbeispiel dadurch, dass kein reflektierendes Element 24 vorgesehen ist.

Beim vierten Ausführungsbeispiel dient das strahlteilende Element 14 zum Hindurchlassen des Lichts der Lichtquelle 12 auf das Objekt 1 (siehe erste Ebene T1; Element 1 nicht gezeigt). Wie in Figur 8 gezeigt, ist die Kombination aus Lichtquelle 12 und zweitem Linsensystem 20.2 relativ zu einer Symmetrieachse des Beleuchtungsstrahlengangs zentriert angeordnet. Ferner dient beim vierten Ausführungsbeispiel das Detektorelement 16 zum Erfassen von an dem Objekt 1 reflektiertem und am strahlteilenden Element 14 reflektiertem Licht. Mit anderen Worten erfolgt hier einerseits eine Beleuchtung des Objekts 1 mit einer Transmission durch das strahlteilende Element 14. Andererseits erfolgt hier eine Detektion des Objekts 1 mit einer Reflexion am strahlteilenden Element 14.

Beim vierten Ausführungsbeispiel ist die Sensoranordnung 10 derart ausgebildet, dass sie in einem 90°-Winkel auskragen kann (vgl. Figur 8). Ferner wird beim vierten Ausführungsbeispiel, wie bereits oben erwähnt, kein reflektierendes Element 24 benötigt.

Mit Bezug auf Figur 1a ist das Gitterelement 18 als reines Amplitudengitter ausgebildet. Dadurch ist das Gitterelement 18 einfach und kostengünstig herstellbar. Das Gitter kann ein lineares Gitter oder ein zweidimensionales Gitter (z. B. Kreuzgitter oder Schachbrettgitter) sein.

Alternativ kann das Gitterelement 18 als lineares gemischtes Amplituden-Phasengitter ausgebildet sein. Dabei ist das Gitterelement 18 in vorteilhafter Weise derart ausgebildet, dass in einer Amplitudenstruktur innerhalb einer Teilungsperiode $TP_{AS}$ die Breite bs eines undurchlässigen Steges gemäß bs = 1/3 $TP_{AS}$ gewählt wird. Ferner ist in jedem zweiten durchlässigen Lückenbereich der Amplitudenstruktur ein phasenschiebender Teilbereich mit einem Phasenhub $\phi$ = $\pi$ angeordnet. In diesem Zusammenhang wird Bezug genommen auf die Anmeldung EP 1 081 457 A2, insbesondere die Erläuterungen zu Figur 2a und 2b.

Beim ersten und dritten Ausführungsbeispiel kann das reflektierende Element 24 auch weggelassen werden. In diesem Fall sind die Lichtquelle 12 und das zweite Linsensystem 20.2 beispielsweise derart angeordnet, dass der erste Strahlengang 13.1 unter einem Winkel von 90° relativ zur optischen Achse O1 auf das strahlteilende Element 14 einfällt.

Alternativ können die Lichtquelle 12 und das zweite Linsensystem 20.2 derart angeordnet sein, dass der erste Strahlengang 13.1 schräg (d. h. unter einem von 90° verschiedenen Winkel, z. B. 60° oder 45°) relativ zur optischen Achse O1 auf das strahlteilende Element 14 einfällt. In diesem Fall sollte eine Verkippung/Drehung des strahlteilenden Elements 14 entsprechend angepasst werden.

Beim ersten und dritten Ausführungsbeispiel kann das zweite Linsensystem 20.2 auch nur aus einem einzigen Linsenelement (z. B. drittes Linsenelement 22.3) bestehen. In diesem Fall kann das vierte Linsenelement 22.4 weggelassen werden. Dies stellt eine kostengünstigere Alternative dar, erfordert aber einen größeren Justageaufwand.

Es ist anzumerken, dass der Übersichtlichkeit halber in Figur 1b die zweite Ebene T2 ohne das Element 16.1, in Figur 7 die erste Ebene T1 ohne das Element 1 sowie in Figur 8 die erste Ebene T1 ohne das Element 1, die zweite Ebene T2 ohne das Element 16.1 und die dritte Ebene T3 ohne das Element 18 gezeigt sind.

Die Erfindung hat insbesondere die folgenden Vorteile: Durch das vorzugsweise als afokales Linsensystem ausgebildete erste Linsensystem 20.1 können im Gegensatz zum Stand der Technik relativ hohe Phasenunterschiede von technischen Oberflächen (d. h. Oberflächen mit den oben genannten Bereichen für die Welligkeitsperiode und -amplitude) vermessen werden. Ferner ist im Gegensatz zum Stand der Technik der Einsatz einer inkohärenten Lichtquelle (z. B. LED) deutlich kostengünstiger, energiesparender und wartungsärmer. Darüber hinaus können durch die inkohärente Lichtquelle sogenannte Speckles im erfassten Intensitätsmuster deutlich verringert werden. Die Sensoranordnung 10 kann zudem als kabelloses System mit Funk und Akku ausgebildet sein. Durch den Einsatz einer Funktechnik zur Datenübertragung wird auch der Einsatz der Sensoranordnung 10 in schlecht zugänglichen Einsatzgebieten, wie beispielsweise im Bearbeitungsraum einer Werkzeugmaschine, ermöglicht. Des Weiteren ist auch eine Einbindung der Sensoranordnung 10 in ein automatisiertes Feedback-Loop-System zur maschinellen Beurteilung von technischen Oberflächen (z. B. zerspanend oder additiv) möglich.

**Patentansprüche**

1. Sensoranordnung (10) zum Erfassen einer Eigenschaft einer in einer ersten Ebene (T1) liegenden Oberfläche (1.1) eines Objekts (1), mit einer Lichtquelle (12) zum Erzeugen von Licht,

   einem strahlteilenden Element (14) zum Umlenken oder Hindurchlassen des Lichts der Lichtquelle (12) auf das Objekt (1),
   einem Detektorelement (16) zum Erfassen von an dem Objekt (1) reflektiertem und durch das strahlteilende Element (14) transmittiertem oder am strahlteilenden Element (14) reflektiertem Licht,
   einem zwischen dem Detektorelement (16) und dem strahlteilenden Element (14) angeordneten Gitterelement (18) zum Erzeugen eines Intensitätsmusters (101-1; 101-2) auf einer in einer zweiten Ebene (T2) liegenden strahlungsempfindlichen Oberfläche (16.1) des Detektorelements (16),
   **dadurch gekennzeichnet, dass**
   die Sensoranordnung (10) ein erstes Linsensystem (20.1) zur Abbildung der ersten Ebene (T1) auf die zweite Ebene (T2) aufweist,
   wobei das erste Linsensystem (20.1) in einem Detektionsstrahlengang zwischen dem Detektorelement (16) und dem Objekt (1) angeordnet ist.

2. Sensoranordnung (10) nach Anspruch 1, wobei das erste Linsensystem (20.1) ein afokales Linsensystem ist.

3. Sensoranordnung (10) nach Anspruch 1 oder 2, wobei das erste Linsensystem (20.1) dazu ausgebildet ist, eine Vergrößerung (m) einer Abbildung der ersten Ebene (T1) auf die zweite Ebene (T2) zu bewirken, wobei die Vergrößerung (m) in einem Bereich von 1 bis 10, im Bereich von 1,5 bis 8 oder im Bereich von 2 bis 6 liegt.

4. Sensoranordnung (10) nach einem der vorhergehenden Ansprüche, wobei das erste Linsensystem (20.1) ein erstes Linsenelement (22.1) und ein zweites Linsenelement (22.2) umfasst, wobei das erste Linsenelement (22.1) zwischen dem strahlteilenden Element (14) und dem Objekt (1) angeordnet ist, wobei das zweite Linsenelement (22.2) zwischen dem Detektorelement (16) und dem strahlteilenden Element (14) angeordnet ist.

5. Sensoranordnung (10) nach Anspruch 4, wobei die Sensoranordnung (10) ein reflektierendes Element (24) zum Umlenken des Lichts der Lichtquelle (12) auf das strahlteilende Element (14) aufweist, wobei die Sensoranordnung (10) ein zwischen der Lichtquelle (12) und dem reflektierenden Element (24) angeordnetes zweites Linsensystem (20.2) aufweist, wobei das zweite Linsensystem (20.2) einen Zwischenbrennpunkt (P') hat, wobei der Zwischenbrennpunkt (P') zwischen dem reflektierenden Element (24) und dem strahlteilenden Element (14) oder zwischen dem strahlteilenden Element (14) und dem ersten Linsenelement (22.1) angeordnet ist, wobei der Zwischenbrennpunkt (P') einer bildseitigen Brennweite (F1) des ersten Linsenelements (22.1) entspricht, wobei das erste Linsenelement (22.1) dazu ausgebildet ist, von dem Zwischenbrennpunkt (P') ausgehendes Licht zu kollimieren.

6. Sensoranordnung (10) nach Anspruch 4, wobei die Lichtquelle (12) eine divergente Lichtquelle (12) ist und lichtstromaufwärts des strahlteilenden Elements (14) an einer vorbestimmten Position (P'') angeordnet ist, wobei die vorbestimmte Position (P'') einer bildseitigen Brennweite (F1) des ersten Linsenelements (22.1) entspricht, wobei das erste Linsenelement (22.1) dazu ausgebildet ist, von der vorbestimmten Position (P'') ausgehendes Licht zu kollimieren.

7. Sensoranordnung (10) nach einem der vorhergehenden Ansprüche, wobei das Gitterelement (18) in einer dritten Ebene (T3) angeordnet ist, wobei die dritte Ebene (T3) und die zweite Ebene (T2) in einem vorbestimmten Abstand (L) voneinander angeordnet sind, wobei der vorbestimmte Abstand (L) kleiner als die Hälfte oder ein Viertel eines von einer Periode (D1) des Gitterelements (18) abhängigen Talbot-Abstands ist.

8. Sensoranordnung (10) nach einem der vorhergehenden Ansprüche, wobei die strahlungsempfindliche Oberfläche (16.1) des Detektorelements (16) eine vorbestimmte Periode (D2) hat, wobei die vorbestimmte Periode (D2) kleiner als die Hälfte, ein Viertel oder ein Zehntel einer Periode (D1) des Gitterelements (18) ist.

9. Sensoranordnung (10) nach einem der vorhergehenden Ansprüche, wobei das Detektorelement (16) derart ausgebildet ist, dass eine Nyquist-Frequenz des Detektorelements (16) einem Vielfachen der Hälfte oder einem ungeradzahligen Vielfachen eines Viertels einer von einer Periode (D1) des Gitterelements (18) abhängigen Ortsfrequenz des durch das Gitterelement (18) erzeugten Intensitätsmusters (101-1; 101-2) entspricht.

**10.** Sensoranordnung (10) nach einem der vorhergehenden Ansprüche, wobei das Gitterelement (18) als reines Amplitudengitter ausgebildet ist.

**11.** Sensoranordnung (10) nach einem der Ansprüche 1 bis 9, wobei das Gitterelement (18) als lineares gemischtes Amplituden-Phasengitter ausgebildet ist.

**12.** Sensoranordnung (10) nach einem der vorhergehenden Ansprüche, wobei die Sensoranordnung (10) ein in einer gemeinsamen inneren Brennebene (I) des ersten Linsensystems (20.1) angeordnetes Blendenelement (32) aufweist, wobei das Blendenelement (32) eine einstellbare Öffnung (32.1) zur Begrenzung eines Strahlengangs des ersten Linsensystems (20.1) hat.

**13.** Sensoranordnung (10) nach einem der vorhergehenden Ansprüche, wobei die Sensoranordnung (10) eine Auswerteeinheit (26) aufweist, wobei die Auswerteeinheit (26) dazu ausgebildet ist, in Abhängigkeit eines das Intensitätsmuster (101-1; 101-2) darstellenden Signals (105) eine Phaseninformation (107) zu ermitteln, und in Abhängigkeit der Phaseninformation (107) eine rekonstruierte Höhe (109) als Eigenschaft der Oberfläche (1.1) des Objekts (1) zu ermitteln.

**14.** Sensoranordnung (10) nach einem der vorhergehenden Ansprüche, wobei die Lichtquelle (12) eine inkohärente Lichtquelle (12) ist.

**15.** Werkzeugmaschine (200) mit einer Sensoranordnung (10) nach einem der vorhergehenden Ansprüche, wobei die Werkzeugmaschine (200) eine Werkzeugaufnahme (202) und ein mit der Werkzeugaufnahme (202) verbundenes Gehäuseteil (204) aufweist, wobei die Sensoranordnung (10) in das Gehäuseteil (204) integriert ist, wobei das Gehäuseteil (204) zwischen der Werkzeugaufnahme (202) und dem Objekt (1) angeordnet ist.

FIG. 1a

EP 4 509 812 A2

# FIG. 1b

FIG. 2

EP 4 509 812 A2

# FIG. 3

EP 4 509 812 A2

# FIG. 4a

FIG. 4b

101-2

103-2

## FIG. 5

## FIG. 6

FIG. 7

EP 4 509 812 A2

# FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 111751012 A

- EP 1081457 A2